# FASCICULE DE BREVET EUROPEEN

(11) **EP 3 732 099 B1**
(45) Date de publication et mention de la délivrance du brevet: **11.10.2023**
(21) Numéro de dépôt: 18833074.0
(22) Date de dépôt: 28.12.2018
(51) Int. Cl.: B63G 8/00, G01S 15/89

(54) **VEHICULE SOUS-MARIN ET PROCEDE DE COMMANDE**
UNTERWASSERFAHRZEUG UND STEUERUNGSVERFAHREN
SUBMARINE VEHICLE AND CONTROL METHOD

(30) Priorité: 28.12.2017 FR 1701396
(43) Date de publication de la demande: 04.11.2020
(73) Titulaire: THALES, 92400 Courbevoie (FR)
(72) Inventeur: FLORIN, Franck, 29200 BREST (FR)
(74) Mandataire: Atout PI Laplace
(86) Numéro de dépôt international: PCT/EP2018/097101
(87) Numéro de publication internationale: WO 2019/129863

(56) Documents cités:
- EP-A1- 0 070 494
- EP-B1- 0 070 494
- GB-A- 2 521 681
- US-A1- 2012 250 457

## Description

Le domaine de l'invention est celui des véhicules sous-marins sans équipage aussi appelés UUV en référence à l'expression anglo-saxonne « Unmanned Underwater Vehicle », notamment celui des véhicules sous-marins autonomes ou drones sous-marins.

Des sonars à antenne synthétique (SAS) sont utilisés pour explorer le fond marin, notamment dans le domaine de la guerre des mines pour détecter, identifier et éventuellement localiser les objets posés sur le fond marin.

Les SAS ont pour but d'améliorer la résolution, à une portée donnée, sans augmenter la dimension linéaire de l'antenne de réception. Le principe du sonar à antenne synthétique consiste à utiliser une antenne physique formée par un réseau linéaire de N transducteurs, c'est à dire N capteurs acoustiques. Dans ce type de sonar, lors de l'avancement du porteur, un dispositif d'émission, ou antenne d'émission, émet P impulsions successives dans un secteur élémentaire fixe par rapport au porteur. On utilise les signaux reçus par les N transducteurs de l'antenne physique de réception à P instants, et donc à P emplacements successifs pour former les voies de l'antenne synthétique. La résolution des images obtenues, c'est-à-dire la résolution des voies des antennes synthétiques, est sensiblement équivalente à celle d'une antenne virtuelle dont la longueur correspond au double environ de la longueur parcourue par l'antenne physique pendant ces P instants successifs.

Les SAS sont soit montés sur des véhicules sous-marins à propulsion autonome, soit sur des poissons remorqués dépourvus de propulseurs.

Les poissons remorqués sont tractés par un véhicule de surface au moyen d'un câble électro-tracteur. Le sonar est alimenté électriquement par le véhicule de surface via le câble et les mesures réalisées par le sonar sont transmises en surface par le câble pour permettre le traitement en temps réel à bord du véhicule de surface et/ou transmission par voie radio vers un centre de traitement terrestre.

Les véhicules sous-marins autonomes munis d'un SAS sont dotés d'un propulseur alimenté par des batteries embarquées à bord du véhicule. Un intérêt de l'imagerie SAS par les véhicules autonomes est leur capacité à réaliser des images en grande profondeur, en raison de l'absence de câble reliant le véhicule sous-marin à un autre véhicule et donc de l'absence de traînée due au câble.

Les différences entre les solutions sur véhicule autonome et sonar remorqué résident principalement dans leur capacité à couvrir une zone étendue et dans le traitement des données.

Le poisson remorqué équipé d'un SAS nécessite l'emploi d'un navire de surface puissant pour remorquer le poisson, moyennant quoi, la vitesse du poisson peut être relativement rapide (de l'ordre de 10 noeuds) et la couverture horaire en imagerie est relativement élevée. Techniquement, la vitesse élevée nécessite une antenne de réception SAS relativement longue afin d'obtenir une large couverture horaire car, plus la vitesse du véhicule est élevée, plus la distance parcourue par le véhicule est grande et plus l'antenne doit être longue pour couvrir le déplacement du véhicule entre deux émissions d'impulsions acoustiques.

Les véhicules sous-marins équipés de SAS évoluant de façon autonome sont limités en énergie et donc en vitesse. Ils sont alors classiquement équipés d'antennes de réception SAS plus courtes et permettent d'obtenir une couverture horaire (surface de la zone imagée par heure) moindre. Les antennes de réception des SAS installés sur des poissons remorqués présentent typiquement une longueur comprise entre 1,5 m et 2,5 m et permettent une couverture horaire plus grande que les drones sous-marins, tandis que les antennes de réception des SAS installés sur véhicules sous-marins à propulsion autonome comprennent des antennes de réception typiquement de l'ordre de 0,5 à 1,5 m qui consomment moins d'énergie mais qui ne permettent pas d'atteindre une couverture horaire aussi grande que les SAS installés sur les poissons remorqués. Typiquement, le rapport de couverture horaire entre les deux solutions pour une portée acoustique de l'antenne fixée est de l'ordre de 2.

Par ailleurs, en raison du faible débit des communications acoustiques sous-marines, un véhicule sous-marin autonome ne peut pas transmettre en temps réel ses données acoustiques à un opérateur de sorte que pour assurer une bonne détection des objets sous-marins il faut soit doter le véhicule sous-marin d'une intelligence artificielle lui permettant de détecter les objets de façon autonome, soit attendre la fin de la mission pour permettre à un opérateur d'analyser les données acoustiques enregistrées à bord du véhicule sous-marin.

Du fait de sa vitesse d'opération et de la capacité de traitement temps réel, le SAS installé sur un poisson remorqué est généralement jugé plus performant qu'un SAS installé sur un véhicule sous-marin autonome. Cependant, l'installation d'un SAS sur un poisson remorqué nécessite un dispositif de remorquage du poisson comportant un navire, un système de mise à l'eau et de récupération du sonar comprenant un treuil et un câble. Ce système de mise à l'eau et de récupération est d'autant plus puissant et volumineux que la profondeur recherchée pour l'imagerie du fond est grande car la nécessité d'un câble plus long entraîne l'augmentation de la taille du treuil et de la puissance du véhicule de surface pour lutter contre la trainée du câble. Cette contrainte limite de fait la profondeur d'intervention des sonars SAS remorqués, surtout s'ils doivent être remorqués par des drones de surface de taille modeste. Typiquement un sonar SAS remorqué d'imagerie de guerre des mines intervient pour des profondeurs inférieures à 100 m, tandis qu'un drone sous-marin est préféré pour des profondeurs plus grandes typiquement jusque 300 m voire au-delà.

Un véhicule sous-marin muni d'un SAS est connu par exemple du document GB 2 521 681 A.

Un but de l'invention est de permettre à un utilisateur de réaliser des missions d'imagerie sonar à large couverture horaire et des missions d'imagerie sonar en grande profondeur sans acquérir deux véhicules différents.

A cet effet, l'invention a pour objet un véhicule sous-marin comprenant un propulseur apte à propulser le véhicule sous-marin, le véhicule sous-marin comprenant un sonar à antenne synthétique comprenant un ensemble d'au moins une antenne physique de réception d'ondes acoustiques, le véhicule sous-marin comprenant un connecteur apte à coupler mécaniquement de façon amovible un câble au véhicule sous-marin de façon à permettre de remorquer le véhicule sous-marin par un véhicule de surface. Selon l'invention, l'antenne physique de réception comprend une pluralité de capteurs acoustiques, le véhicule sous-marin comprenant un réseau électrique apte à véhiculer de l'énergie électrique jusqu'à l'antenne de réception, le réseau électrique étant configuré de façon à présenter plusieurs états dans lesquels il est apte à véhiculer de l'énergie électrique vers des ensembles différents de capteurs acoustiques présentant des nombres respectifs différents de capteurs acoustiques, le réseau électrique étant apte à être dans au moins un premier état et dans au moins un deuxième état dans lequel le réseau électrique est apte à véhiculer de l'énergie électrique vers un nombre de capteurs acoustiques inférieur au nombre de capteurs acoustiques alimentés dans chaque premier état, le réseau électrique de l'antenne de réception étant configuré pour être dans un dudit au moins un premier état lorsque le véhicule sous-marin est couplé mécaniquement au câble et dans un dudit au moins un deuxième état lorsque le véhicule sous-marin est découplé mécaniquement du câble.

Avantageusement, l'invention comprend au moins une des caractéristiques ci-dessous prise seule ou en combinaison :
- le véhicule sous-marin est apte à être utilisé en véhicule sous-marin autonome lorsqu'il est découplé mécaniquement du câble et à être utilisé en véhicule sous-marin non autonome lorsqu'il est couplé mécaniquement au véhicule de surface via le câble,
- le réseau électrique de l'antenne de réception est configuré pour véhiculer de l'énergie électrique vers un nombre plus élevé de capteurs, lorsqu'il est couplé mécaniquement au câble que lorsqu'il n'est pas couplé mécaniquement au câble,
- l'antenne de réception d'ondes acoustiques comprend une pluralité de réseaux de capteurs acoustiques alignés selon un même axe,
- le réseau électrique est apte à être un premier état dans lequel il véhicule ou est apte à véhiculer de l'énergie simultanément vers tous les capteurs acoustiques de l'antenne physique de réception et dans un deuxième état dans lequel il véhicule ou est apte à véhiculer de l'énergie vers seulement une partie des réseaux linéaires de l'antenne,
- l'antenne physique de réception comprend deux réseaux linéaires de capteurs acoustiques, chaque réseau linéaire comprenant un ensemble de capteurs acoustiques, les capteurs acoustiques de l'ensemble étant adjacents, les capteurs acoustiques des deux ensembles étant différents,
- l'antenne physique de réception comprend deux réseaux linéaires de capteurs acoustiques comprenant respectivement un premier ensemble de capteurs acoustiques et un deuxième ensemble de capteurs acoustiques différents des capteurs acoustiques du premier ensemble, chaque couple de capteurs adjacents de l'antenne physique de réception comprenant un capteur acoustique du premier ensemble et un capteur acoustique du deuxième ensemble,
- l'ensemble d'au moins une antenne physique de réception comprend deux antennes physiques de réception d'ondes acoustiques parallèles comprenant chacune une pluralité de réseaux de capteurs acoustiques alignés selon un même axe d'alignement, les axes d'alignement respectifs des deux antennes étant sensiblement parallèles et distants l'un de l'autre,
- le réseau électrique est apte à être dans un premier état dans lequel il alimente ou est apte à alimenter simultanément tous les capteurs acoustiques des deux antennes de réception et dans un deuxième état dans lequel il alimente ou est apte à alimenter seulement un réseau linéaire de capteurs acoustiques de chacune des antennes de réception parallèles,
- le réseau d'alimentation présente un premier état dans lequel il alimente ou est apte à alimenter simultanément tous les capteurs acoustiques des deux antennes de réception et un deuxième état dans lequel il alimente ou est apte à alimenter tous les capteurs acoustiques d'une seule des deux antennes physique de réception,
- le connecteur assure une connexion électrique entre le réseau électrique et le câble lorsque le câble est couplé mécaniquement au connecteur, le réseau électrique étant configuré pour alimenter électriquement l'antenne de réception via le câble lorsque le réseau électrique est dans le premier état,
- le connecteur assure une connexion en communication entre le câble et un réseau de communication du véhicule sous-marin lorsque le câble est couplé mécaniquement au connecteur, le réseau de communication étant configuré pour relier l'antenne de réception en communication au câble de sorte à permettre de transmettre les mesures réalisées par l'antenne physique de réception au câble lorsque le réseau d'alimentation est dans le premier état,
- le véhicule comprend des moyens de traitement comprenant un ensemble d'au moins un processeur apte à traiter des mesures délivrées par l'antenne physique de réception, les moyens de traitement étant configurés pour qu'un processeur de l'ensemble d'au moins un processeur traite des mesures délivrées par l'antenne physique de réception uniquement lorsque le véhicule sous-marin est connecté mécaniquement au câble, c'est-à-dire couplé mécaniquement au câble.

L'invention se rapporte également à un procédé de commande d'un réseau d'électrique d'un véhicule sous-marin selon l'une quelconque des revendications précédentes, ledit procédé comprenant les étapes suivantes :
- alimenter un premier ensemble de capteurs acoustiques, comprenant un premier nombre de capteurs acoustiques, lorsque le véhicule est connecté, c'est-à-dire couplé, mécaniquement au câble,
- alimenter un deuxième ensemble de capteurs, comprenant un deuxième nombre plus faible de capteurs acoustiques que le premier nombre, lorsque le véhicule est connecté mécaniquement au câble.

Avantageusement, le procédé comprend les étapes suivantes :
- alimenter simultanément tous les capteurs acoustiques des deux antennes de réception lorsque le véhicule est connecté mécaniquement au câble,
- alimenter seulement un sous-ensemble de capteurs acoustiques de chacune des antennes de réception parallèles.

L'invention se rapporte également à un de commande d'un réseau de communication d'un véhicule sous-marin selon l'invention comprenant les é tapes suivantes :
- relier un premier ensemble de capteurs, comprenant un premier nombre de capteurs acoustiques, en communication avec le câble lorsque le véhicule est couplé mécaniquement au câble,
- relier un deuxième ensemble de capteurs acoustiques, comprenant un deuxième nombre de capteurs acoustiques plus faible que le premier nombre, en communication avec une mémoire du véhicule lorsque le véhicule est découplé mécaniquement du câble.

Avantageusement, le procédé comprend les étapes suivantes :
- transmettre des mesures générées par le premier ensemble de capteurs au câble, lorsque le véhicule est couplé mécaniquement au câble,
- transmettre des mesures générées par le deuxième ensemble de capteurs à la mémoire, lorsque le véhicule est découplé mécaniquement du câble.

L'invention sera mieux comprise à l'étude de quelques modes de réalisation décrits à titre d'exemples nullement limitatifs, et illustrés par des dessins annexés sur lesquels d'une figure à l'autre les mêmes éléments sont désignés par les mêmes références :
- la figure 1 représente schématiquement une vue de côté d'un véhicule sous-marin selon l'invention
- la figure 2 représente schématiquement une vue du dessous de ce même véhicule,
- la figure 3a représente schématiquement le véhicule sous-marin relié mécaniquement à un véhicule de surface par un câble, la figure 3b représente ce même véhicule sous-marin déconnecté du véhicule de surface,
- la figure 4 représente schématiquement une partie d'un réseau électrique du véhicule sous-marin,
- la figure 5 représente schématiquement une partie d'un exemple de réseau de communication du véhicule sous-marin,
- la figure 6 représente schématiquement une partie d'un autre exemple de réseau de communication du véhicule sous-marin.

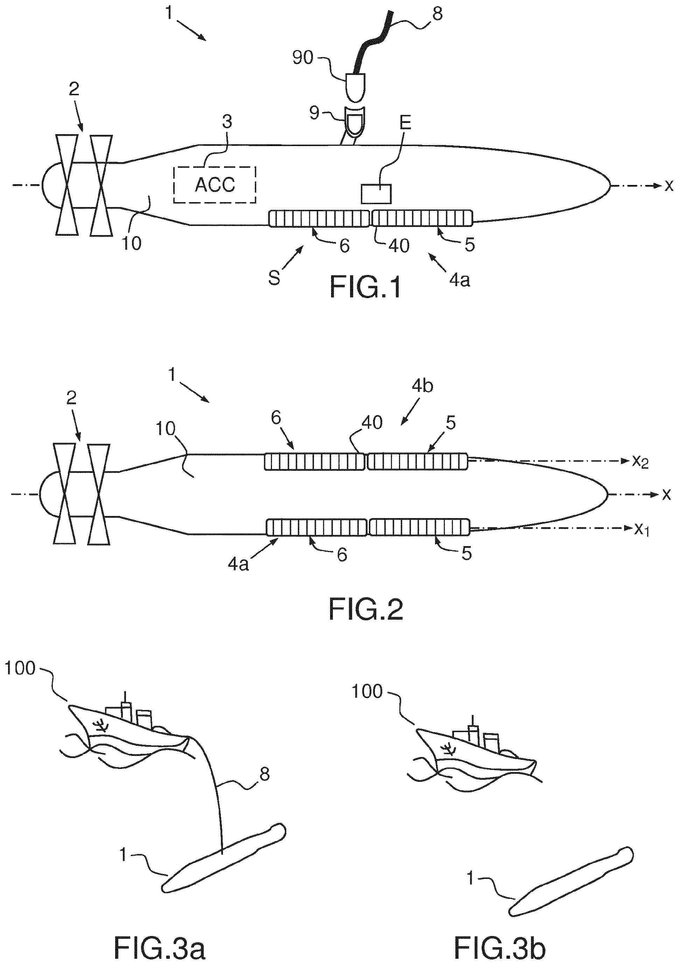

Comme visible sur la figure 1, le véhicule sous-marin 1 comprend un propulseur 2 monté sur un corps 10 du véhicule sous-marin et qui sert à propulser le véhicule sous-marin 1. Le véhicule sous-marin comprend également un sonar à antenne synthétique SAS, S.

Le véhicule sous-marin 1 est destiné à se déplacer principalement selon un axe x appelé axe principal de déplacement du véhicule 1. Cet axe est l'axe longitudinal du corps 10 du véhicule 1.

Le véhicule sous-marin 1 comprend un accumulateur d'énergie électrique 3 apte à alimenter électriquement le propulseur 2 et le SAS, S.

Le sonar S comprend un dispositif d'émission E comprenant une ou plusieurs antennes d'émission aptes à émettre des impulsions acoustiques vers une zone observée et au moins une antenne physique de réception 4a permettant de mesurer des signaux rétrodiffusés issus des impulsions émises par au moins une antenne d'émission E. L'antenne d'émission peut être un équipement distinct des antennes de réception ou bien comprendre des transducteurs électroacoustiques d'au moins une antenne de réception.

Chaque antenne physique de réception comprend une pluralité de capteurs acoustiques 40. Les capteurs acoustiques 40 d'une même antenne sont alignés selon un même axe. Chaque capteur acoustique 40 est un transducteur électroacoustique ou hydrophone.

Sur la réalisation particulière de la figure 2, le sonar comprend deux antennes physiques de réception 4a, 4b.

Les antennes de réceptions 4a, 4b sont sensiblement parallèles entre elles, elles s'étendent linéairement sensiblement parallèlement à l'axe x. Chaque antenne 4a, 4b s'étend linéairement selon un axe d'alignement x1 ou x2 et les axes d'alignement des deux antennes sont espacés selon une direction perpendiculaire à l'axe x. L'axe d'alignement x1 ou x2 d'une antenne est l'axe selon lequel les capteurs acoustiques de l'antenne sont alignés.

Sur la réalisation des figures, une des antennes est disposée à bâbord et l'autre à tribord par rapport au corps 10.

Dans l'exemple non limitatif des figures, chacune des antennes physiques linéaires comprend un couple de réseaux linéaires de capteurs acoustiques 5 et 6. Chaque réseau linéaire 5 et 6 de capteurs acoustiques comprend plusieurs capteurs acoustiques 40 alignés selon un même axe. Les réseaux 5 et 6 peuvent comprendre le même nombre de capteurs acoustiques ou des nombres différents de capteurs acoustiques. Les capteurs 40 de tous les réseaux linéaires d'une même antenne sont alignés selon un même axe x1 ou x2.

En variante, le SAS comprend une seule antenne physique de réception ou plus de deux antennes physiques de réception.

Le véhicule sous-marin 1 comprend un connecteur mécanique 9 permettant de coupler mécaniquement et électriquement le véhicule sous-marin 1 de façon amovible à un câble 8 de sorte à permettre de relier mécaniquement le véhicule sous-marin 1 à un véhicule de surface 100 de façon temporaire.

Le connecteur 9 est par exemple du type mâle ou femelle destiné à coopérer avec un autre connecteur 90 femelle ou respectivement mâle équipant une extrémité du câble de sorte que lorsque le connecteur mâle et le connecteur femelle coopèrent, le véhicule est relié mécaniquement au câble ce qui lui permet d'être relié mécaniquement au véhicule de surface.

Sur la figure 3a, le véhicule sous-marin 1 est couplé mécaniquement à un véhicule de surface 100 via le câble 8. Sur la figure 3b, le véhicule sous-marin 1 est autonome, il est séparé du câble 8.

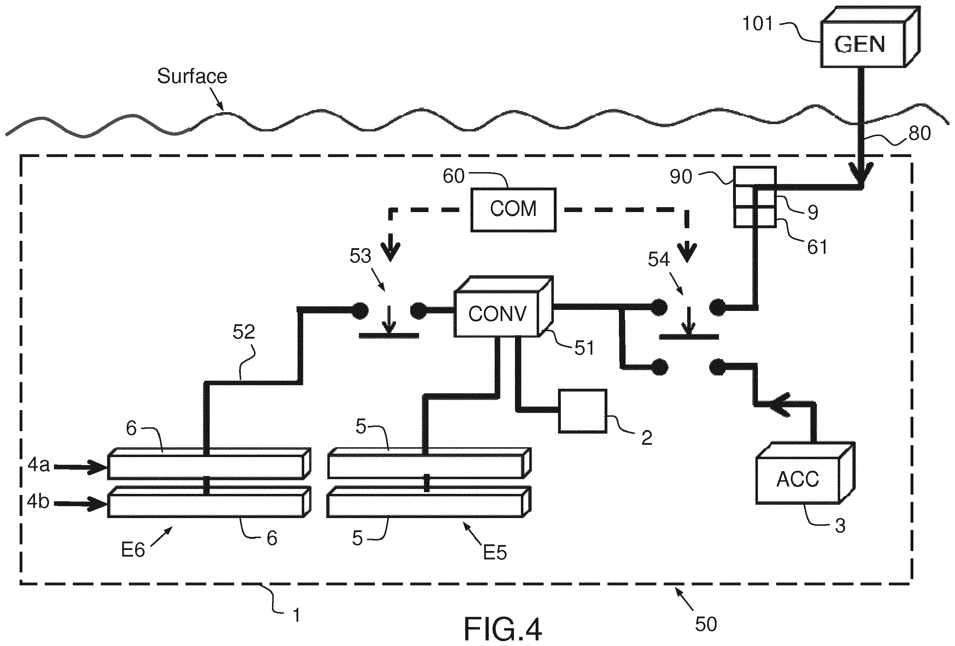

La figure 4 représente schématiquement un exemple d'une partie d'un réseau électrique 50 du véhicule. Ce réseau électrique 50 permet de véhiculer de l'énergie électrique jusqu'à l'ensemble d'au moins une antenne de réception acoustique 4a, 4b.

Selon l'invention, le réseau électrique 50 est apte à être dans plusieurs états dans lesquels il véhicule ou est apte à véhiculer de l'énergie électrique vers des ensembles différents de capteurs acoustiques présentant des nombres différents de capteurs acoustiques. Autrement dit, le nombre de capteurs acoustiques alimentés, c'est-à-dire activés, est différent dans les deux états du réseau électrique 50. Ces nombres sont non nuls.

Dans l'exemple non limitatif de la figure 4, le réseau électrique 50 comprend un convertisseur de puissance CONV, 51 relié électriquement en permanence à un premier ensemble de réseaux linéaires E5 comprenant les réseaux 5 des deux antennes de réception 4a, 4b. Le deuxième ensemble de réseaux linéaires E6 comprenant les réseaux 6 des antennes de réception 4a, 4b est relié électriquement au convertisseur de puissance 51 par une ligne d'alimentation 52 comprenant un interrupteur 53. L'interrupteur 53 est apte à être soit dans un premier état, état fermé, dans lequel il relie électriquement le deuxième ensemble de réseaux linéaires E6 au convertisseur 51, soit dans un deuxième état dans lequel il ouvre la ligne d'alimentation 52 de sorte que le deuxième ensemble de réseaux linéaires E6 n'est plus relié électriquement au convertisseur 51. Lorsque l'interrupteur 53 est dans le premier état, tous les capteurs du deuxième ensembleE6 de réseaux linéaires 6 sont activés puisqu'ils sont alimentés électriquement par le convertisseur 51, ils réalisent alors des mesures des signaux rétrodiffusés. Lorsque l'interrupteur 53 est dans le deuxième état, les capteurs du deuxième ensemble E6 de réseaux linéaires 6 sont désactivés puisqu'il n'est pas relié électriquement au convertisseur 51 et donc pas alimenté électriquement par le convertisseur 51. Les capteurs acoustiques du premier ensemble E5 de réseaux linéaires 5 sont quant à eux reliés en permanence au convertisseur 51.

Autrement dit, dans l'exemple non limitatif des figures, le réseau électrique 50 est apte à être dans plusieurs états dans lesquels il est apte à véhiculer de l'énergie électrique vers différents ensembles de capteurs acoustiques (E5+E6 dans le premier état et E5 dans le deuxième état) comprenant des nombres différents de capteurs acoustiques (E5 + E6 comprend plus de capteurs qu'E5).

L'invention permet donc de proposer un système unique capable de cumuler les avantages du SAS installé sur un poisson remorqué et du SAS installé sur un véhicule autonome et d'offrir une meilleure souplesse d'emploi à l'utilisateur tout en lui évitant de faire l'acquisition de deux systèmes différents. En effet, le véhicule selon l'invention présente une capacité de réception d'ondes acoustiques qui peut être modulée ce qui permet au véhicule d'adapter sa capacité de réception d'ondes acoustiques à son état, remorqué par un véhicule de surface ou autonome, et donc à ses capacités en vitesse et/ou en énergie en modifiant de façon judicieuse l'état du réseau électrique en fonction de l'état du véhicule. Le véhicule qui est apte à acquérir des mesures avec un nombre variable de capteurs peut acquérir, en utilisant plus de capteurs, des images de même résolution à plus grande vitesse et donc obtenir une plus grande couverture horaire.

Ainsi, un même véhicule sous-marin 1 est apte, lorsqu'il est relié mécaniquement à un véhicule de surface 100, à explorer le fond marin avec une large couverture horaire en activant la totalité de l'antenne à grande vitesse et ce, pendant une longue durée, s'il est alimenté par le véhicule de surface 100. Il est également capable, lorsqu'il est détaché du véhicule de surface, de réaliser des mesures en grande profondeur avec une plus petite couverture horaire ou une plus faible résolution en activant seulement une partie de l'antenne de réception pour limiter sa consommation d'énergie.

Le véhicule sous-marin 1 selon l'invention étant doté d'un propulseur 2, il permet d'utiliser des navires de surface de taille limitée puisqu'il n'est pas nécessaire de prévoir des moyens pour sa mise à l'eau ni pour sa récupération à bord des navires de surface.

Avantageusement, pour profiter au mieux de la capacité à alimenter des nombres différents de capteurs, le réseau électrique 50 est configuré pour véhiculer de l'énergie vers un nombre plus grand de capteurs acoustiques des antennes lorsqu'il est couplé mécaniquement au câble 8 que lorsqu'il est séparé du câble 8.

A cet effet, le véhicule 1 du mode de réalisation non limitatif de la figure 4 comprend un organe de commande COM, 60, configuré pour mettre l'interrupteur 53 dans le premier état lorsque le véhicule sous-marin 1 est relié mécaniquement au câble 8 et pour mettre l'interrupteur 53 dans le deuxième état lorsque le véhicule sous-marin 1 n'est plus couplé mécaniquement au câble 8. Le véhicule sous-marin 1 comprend également un capteur 61 permettant de détecter si le véhicule est couplé mécaniquement au câble 8 et d'en informer l'organe de commande 60.

Avantageusement, l'ensemble d'au moins un premier état comprend un premier état dit optimal dans lequel le réseau électrique 50 véhicule de l'énergie acoustique vers tous les capteurs acoustiques des antennes de réception du sonar.

C'est le cas de la réalisation particulière de la figure 4, le réseau électrique 50 est apte à être dans un premier état dans lequel le réseau électrique 50 est apte à véhiculer de l'énergie électrique simultanément vers tous les capteurs acoustiques des deux antennes 4a, 4b (i.e. tous les capteurs des ensembles E5 et E6). L'interrupteur 53 est alors dans l'état fermé. Le réseau électrique 50 est apte à être dans un deuxième état dans lequel il est apte à véhiculer de l'énergie électrique simultanément uniquement vers les capteurs acoustiques du premier ensemble E5, c'est-à-dire vers les capteurs des réseaux linéaires 5 des deux antennes 4a et 4b.

Avantageusement, les capteurs acoustiques alimentés lorsque le véhicule sous-marin 1 est déconnecté du véhicule de surface 100, et appartenant à une même antenne sont adjacents les uns aux autres. Ils ne sont pas séparés par des capteurs non alimentés. Autrement dit, les réseaux linéaires 5 et 6 d'une même antenne 4a ou 4b sont adjacents selon l'axe de l'antenne et les capteurs acoustiques d'un même réseau 5 ou 6 d'une même antenne 4a ou 4b sont des capteurs acoustiques adjacents les uns aux autres.

Dans une autre réalisation, lorsque le véhicule sous-marin est déconnecté du véhicule de surface, un seul des deux capteurs de chaque couple de capteurs adjacents d'une même antenne est alimenté électriquement. Avantageusement, on réalise ce type d'alimentation pour chacune des antennes. Autrement dit, on alimente un capteur sur deux de chaque antenne. Autrement dit, les capteurs d'une même antenne appartiennent alternativement à un premier réseau de capteurs et à un deuxième réseau de capteurs lorsqu'on se déplace selon l'axe de l'antenne. Un seul des deux réseaux est alimenté lorsque le véhicule sous-marin est déconnecté, c'est-à-dire découplé, du câble. Chaque capteur acoustique d'un réseau d'une antenne 4a est adjacent à un capteur acoustique d'un autre réseau de la même antenne. Dans ce cas, la résolution du SAS est deux fois plus faible qu'avec que lorsque tous les capteurs alimentés.

Dans la réalisation non limitative des figures, les premiers réseaux 5 des deux antennes 4a et 4b présentent sensiblement la même longueur, c'est-à-dire le même nombre de capteurs acoustiques et sont sensiblement symétriques l'un de l'autre par rapport à un plan passant par l'axe x. Ainsi, tout se passe comme si, lorsque le véhicule sous-marin est en autonomie, on utilisait des antennes de réception plus courtes que lorsque le véhicule est relié mécaniquement au véhicule de surface.

Avantageusement, le connecteur mécanique 9 est aussi un connecteur électrique qui assure une connexion électrique entre le réseau 50 et le câble 8, lorsque le câble 8 est couplé mécaniquement et électriquement au véhicule sous-marin 1. Autrement dit, le connecteur mécanique 9 assure une connexion électrique entre le réseau électrique 50 du véhicule et une ligne d'alimentation 80 du câble 8, lorsque le câble 8 est couplé mécaniquement au véhicule sous-marin 1. La ligne d'alimentation 80 du câble 8 permet de relier électriquement le réseau électrique 50 à une source d'alimentation GEN, 101 en énergie électrique embarquée du navire de surface 100. Autrement dit, le câble permet d'alimenter électriquement en énergie le réseau électrique 50 à partir du navire de surface via le câble 8.

Avantageusement, le réseau électrique 50 est configuré pour alimenter électriquement le sonar et notamment les antennes de réception 4a, 4b, depuis le câble 8, par exemple au moyen de la source GEN 101, lorsque le réseau 50 est relié électriquement au câble 8 et pour alimenter électriquement les antennes de réception 8 depuis l'accumulateur d'énergie électrique ACC, 3 du véhicule lorsque le réseau 50 n'est pas relié électriquement au câble, c'est-à-dire lorsque le véhicule sous-marin 1 est séparé du câble 8.

A cet effet, le réseau 50 de la figure 4 comprend un commutateur 54 apte à être alternativement dans un premier état dans lequel il relie électriquement le convertisseur de puissance 51 au connecteur 9 et donc au câble 8, permettant une alimentation de l'antenne depuis le câble 8 uniquement, et dans un deuxième état dans lequel il relie le convertisseur 51 à l'accumulateur 3 du véhicule de sorte que le convertisseur 51 soit alimenté électriquement via l'accumulateur 3. Le réseau d'alimentation 50 est alors configuré pour que le commutateur 54 soit dans le premier état lorsque le véhicule 1 est couplé mécaniquement et électriquement câble 8 et pour mettre le commutateur 54 dans le deuxième état lorsque le véhicule 1 est séparé du câble 8. Cela est réalisé par l'organe de commande COM, 60 du véhicule sous-marin 1. Par conséquent, lorsque le véhicule 1 est couplé mécaniquement au câble 8, tous les capteurs acoustiques sont alimentés électriquement, c'est-à-dire qu'ils sont actifs et ils réalisent des mesures de signaux acoustiques rétrodiffusés. Ces réseaux linéaires sont alimentés électriquement par une source disposée à bord du véhicule de surface 100. Lorsque le véhicule sous-marin 1 est séparé du câble 8, seuls les capteurs acoustiques des premiers réseaux linéaires 5 sont alimentés et ils sont alimentés par l'accumulateur d'énergie électrique 3 du véhicule sous-marin 1. Cette configuration du réseau d'alimentation 50 est la plus adaptée à la capacité en énergie du véhicule sous-marin et normalement à sa capacité en vitesse, le véhicule de surface ayant classiquement une plus grande capacité en vitesse que le véhicule sous-marin 1.

Dans la réalisation de la figure 4, le convertisseur 51 est alimenté directement par la source 101 via le câble 8 lorsque le câble 8 est relié au véhicule sous-marin 1. En variante, la source 101 alimente électriquement le l'accumulateur 3 via le câble et l'accumulateur 3 alimente électriquement le convertisseur 51. Autrement dit, les capteurs des antennes sont alimentés via le câble par l'intermédiaire de l'accumulateur 3.

Avantageusement, comme représenté sur la figure 4, le réseau 50 est configuré de façon à être apte à, ou est configuré pour, alimenter électriquement le propulseur 2 via le câble 8 lorsque le câble 8 est couplé électriquement au réseau 50. L'activation d'un nombre plus élevé de capteurs acoustiques, lorsque le véhicule sous-marin 1 est couplé au câble 8 est alors la configuration la plus adaptée à l'énergie électrique disponible.

Avantageusement, le réseau 50 est configuré de façon à alimenter électriquement le propulseur 2 au moyen de l'accumulateur 3 lorsque le véhicule 1 est séparé du câble 8.

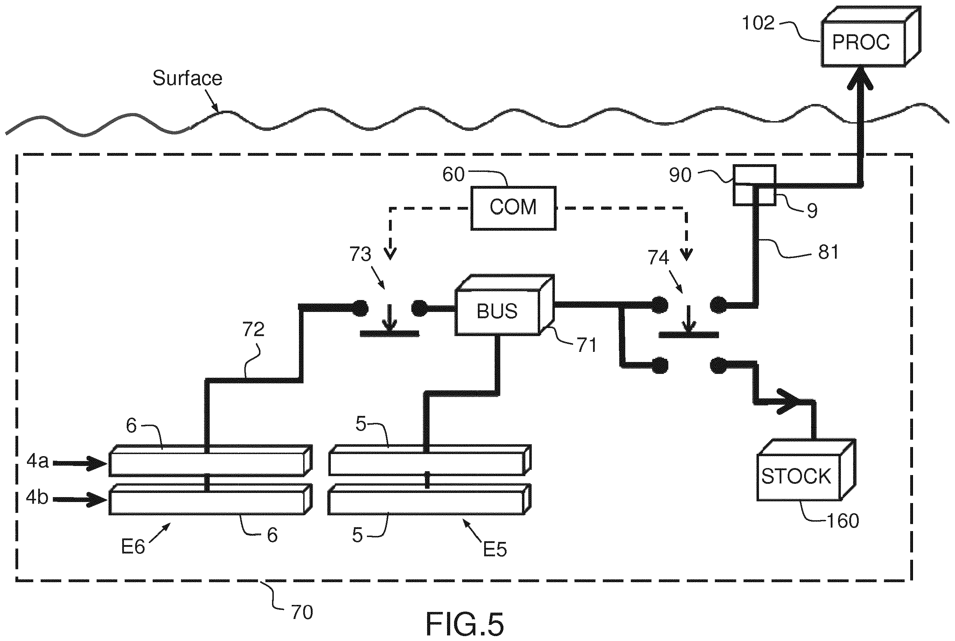

Comme visible sur la figure 5 représentant une partie d'un réseau de communication 70 du véhicule sous-marin 1, le véhicule sous-marin 1 comprend une mémoire STOCK, 160 apte à stocker des mesures acoustiques obtenues par les capteurs acoustiques de chaque antenne physique de réception acoustique 4a, 4b.

Avantageusement, le connecteur 9 assure une connexion en communication entre une ligne de transmission de données 81 du câble 8 et le réseau de communication 70 du véhicule lorsque le câble 8 est couplé mécaniquement au connecteur 9. Le réseau de communication 70 est apte à relier en communication chaque antenne de réception 4a, 4b au connecteur 9 de sorte à relier chaque antenne de réception 4a, 4b en communication au véhicule de surface 100.

Le véhicule de surface 100 comprend par exemple un processeur PROC, 102 apte à traiter des mesures obtenues au moyen des capteurs de chaque antenne de réception 4a, 4b.

Avantageusement, le réseau de communication 70 est configuré pour relier chaque antenne de réception 4a, 4b en communication au câble 8 de sorte à transmettre les mesures réalisées par les capteurs actifs de chaque antenne physique de réception au câble 8 lorsque le véhicule sous-marin 1 est relié mécaniquement au câble 8 et pour relier chaque antenne de réception 4a, 4b en communication à la mémoire 160, éventuellement via un processeur, de sorte à transmettre les mesures réalisées par les capteurs actifs de chaque antenne physique de réception à la mémoire 160, éventuellement via un processeur, lorsque le véhicule sous-marin 1 est séparé du câble 8. Cette configuration est, par exemple, réalisée par l'organe de commande 60. Cela permet de réaliser un traitement des mesures en temps réel lorsque le véhicule sous-marin est relié en temps réel et ainsi d'éviter d'avoir à attendre la fin de la mission pour traiter ces mesures. Le processeur peut assurer un traitement des mesures délivrées par les antennes physiques avant transmission à la mémoire.

A cet effet, dans l'exemple non limitatif de la figure 5, le réseau de transmission de données comprend un bus de transmission de données 71 auquel le premier ensemble de réseaux linéaires E5 est relié en permanence en communication. Le deuxième ensemble de réseaux linéaires E6 est relié en communication au bus de transmission de données par une ligne de transmission de données 72 comprenant un interrupteur 73. L'interrupteur 73 est apte à être dans un premier état, état fermé, dans lequel il relie en communication le deuxième ensemble E6 de réseaux linéaires 6 au bus de communication 71 et dans un deuxième état dans lequel il déconnecte le deuxième ensemble E6 de réseaux linéaires 6 du bus de communication 71. Lorsque l'interrupteur 73 est dans le premier état, les capteurs acoustiques des deux ensembles E5 et E6 sont aptes à communiquer avec le bus de communication 71 et lorsque l'interrupteur 73 est dans le deuxième état, seuls les capteurs acoustiques du premier ensemble E5 sont aptes à communiquer avec le bus de communication 71.

Le réseau de communication 70 comprend également un commutateur 74 apte à être alternativement dans un premier état dans lequel il relie en communication le bus de communication 71 à la ligne de transmission de données 81 du câble 8, permettant une communication entre le bus de communication 81 et un équipement déporté à bord du bâtiment de surface, par exemple le processeur 102, et dans un deuxième état dans lequel le commutateur 74 relie en communication le bus de communication 71 à un équipement du véhicule sous-marin 1, par exemple la mémoire 160.

Avantageusement, le réseau de communication 70 est configuré pour relier les deux ensembles E5 et E6 de réseaux linéaires 5, 6 en communication au bus de communication 71 lorsque le véhicule 1 est relié mécaniquement au câble 8 et pour relier uniquement le premier ensemble E5 de réseaux linéaires 5 en communication au bus de communication 71 lorsque le véhicule est séparé du câble 8. Autrement dit, seul les capteurs du premier ensemble E5 de réseaux linéaires 5 sont aptes à transmettre des données au bus de communication 71, ou inversement, lorsque le véhicule 1 est séparé du câble 8. Le réseau de communication 70 est également avantageusement configuré de façon que les capteurs des deux ensembles E5 et E6 de réseaux linéaires 5, 6 soient aptes à transmettre leurs mesures au bus de communication 71, ou inversement, lorsque le véhicule 1 est relié mécaniquement au câble 8.

Dans l'exemple non limitatif des figures, cela signifie que le réseau de communication 70 est configuré de façon que l'interrupteur 73 et le commutateur 74 du réseau de communication soient chacun dans leur premier état lorsque véhicule sous-marin 1 est relié mécaniquement au câble 8. Les capteurs acoustiques des deux ensembles E5 et E6 de réseaux linéaires sont alors aptes à communiquer avec le processeur 8 et sont avantageusement configurés pour lui transmettre leurs mesures de façon que la mémoire stocke ces mesures.

Le réseau de communication 70 est avantageusement configuré de façon que l'interrupteur 73 et le commutateur 74 du réseau de communication soient chacun dans leur deuxième état lorsque le réseau d'alimentation est séparé du câble 8. Seuls les capteurs du premier ensemble E5 de réseaux linéaires 5 sont alors aptes à communiquer avec la mémoire 160 et notamment à lui transmettre des mesures de façon que la mémoire 160 stocke ces mesures.

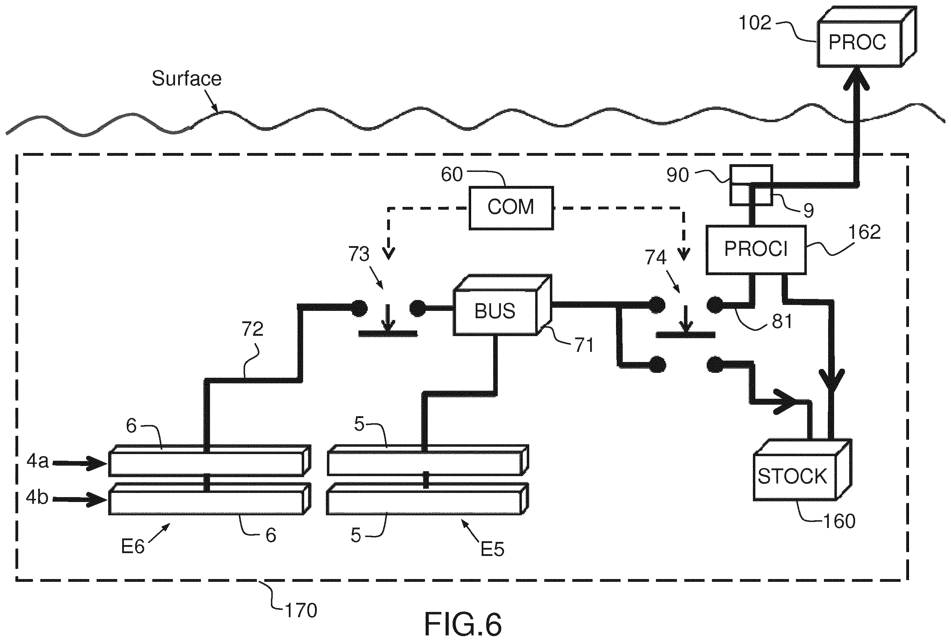

La figure 6 diffère de la figure 5 en ce que le réseau de communication 170 est configuré pour relier un processeur PROCI 162 du véhicule sous-marin 1 en communication avec les antennes physiques de réception, uniquement lorsque l'interrupteur 73 est dans le premier état.

Avantageusement, le véhicule sous-marin comprend des moyens de traitement comprenant un ensemble d'au moins un processeur apte à traiter des mesures délivrées l'antenne physique de réception. Avantageusement, les moyens de traitement sont configurés pour qu'un processeur PROCI2 de l'ensemble d'au moins un processeur traite des mesures délivrées par les capteurs acoustiques des antennes physiques de réception uniquement lorsque le véhicule sous-marin est connecté mécaniquement au câble. Le processeur est par exemple apte à mettre en oeuvre un procédé de formations de voies d'antennes synthétiques et/ou un procédé de compression d'impulsions et/ou un procédé d'auto-calibration. Les moyens de traitement comprennent par exemple l'organe de commande 60 qui est configuré pour commander le processeur PROCI2 de sorte à activer le processeur pour qu'il traite les données issues des capteurs acoustiques des antennes uniquement lorsque le véhicule sous-marin est relié mécaniquement au câble. Cela permet de réduire le débit de données, coûteux dans le cas des mesures d'un SAS, entre le véhicule sous-marin et le véhicule de surface. Cela permet également d'utiliser une interface plus standard entre le véhicule sous-marin et le véhicule de surface. Cela permet d'éviter l'installation d'un processeur sur le véhicule de surface ce qui permet de tracter le véhicule sous-marin au moyen de véhicules de surface multiples car non dédiés.

Les données issues du traitement des mesures par le processeur PROCI, 162 peuvent être mémorisées dans la mémoire STOCK, 160.

Les moyens de traitement peuvent comprendre au moins un autre processeur interposé entre la mémoire 160 et l'interrupteur 74 de façon à effectuer un prétraitement des mesures acoustiques.

Dans la réalisation des figures, le réseau électrique 50 est apte à être dans un premier état dans lequel il alimente électriquement chaque capteur des antennes 4a, 4b et dans un deuxième état dans lequel il alimente électriquement un sous-ensemble de capteurs de chaque antenne 4a, 4b.

En variante, dans le deuxième état, le réseau électrique 50 alimente tous les capteurs d'une seule des antennes de réception. Ce mode de réalisation permet de réaliser une économie d'énergie. En variante, dans le deuxième état, le réseau électrique alimente seulement une partie des capteurs d'une seule des antennes.

En variante, le réseau électrique est apte à être dans plusieurs premiers états dans lesquels il alimente des nombres différents de capteurs lorsque le véhicule est relié mécaniquement au câble. Cela permet, par exemple, d'alimenter plus de capteurs lorsque la vitesse du véhicule 1 est plus élevée.

Dans la réalisation de la figure 4, le convertisseur 51 est inapte à alimenter les capteurs du deuxième ensemble de réseau de capteurs 6 lorsque l'interrupteur est dans le premier état. En variante, le deuxième ensemble E6 de réseau de capteurs 6 est relié électriquement en permanence au convertisseur 51 de sorte que leurs capteurs puissent être alimentés électriquement. En revanche, l'organe de commande est configuré pour commander le convertisseur de sorte à alimenter ou non ces capteurs. Par exemple, l'organe de commande 60 est configuré pour commander le convertisseur de sorte à alimenter les capteurs du réseau de capteurs 6 uniquement lorsque le véhicule 1 est relié au câble 8. Autrement dit, le réseau 50 est apte à alimenter tous les capteurs mais il est configuré pour alimenter seulement une partie des capteurs. Autrement dit, la fonction de l'interrupteur 53 est réalisée par l'organe de commande. Les fonctions de l'interrupteur 73 et des commutateurs 54 et 74 peuvent également, en variante, être réalisées par l'organe de commande ou par un ensemble d'organes de commande.

L'invention se rapporte également à un procédé de commande du véhicule sous-marin 1 ou du réseau électrique 50 selon l'invention comprenant les étapes suivantes :
- alimenter simultanément un premier ensemble de capteurs comprenant un premier nombre de capteurs acoustiques lorsque le véhicule est connecté, c'est-à-dire couplé, mécaniquement au câble,
- alimenter simultanément un deuxième ensemble de capteurs comprenant un deuxième nombre de capteurs acoustiques, plus faible que le premier nombre, lorsque le véhicule n'est pas connecté mécaniquement au câble.

Avantageusement, le procédé comprend les étapes suivantes :
- alimenter simultanément tous les capteurs acoustiques des deux antennes lorsque le véhicule est connecté mécaniquement au câble,
- alimenter simultanément seulement les capteurs d'un premier réseau linéaire de capteurs acoustiques de chacune des antennes linéaires parallèles, lorsque le véhicule n'est pas connecté mécaniquement au câble.

Autrement dit, le premier ensemble de capteurs correspond à l'ensemble des capteurs acoustiques de l'antenne, c'est-à-dire des deux antennes élémentaires. Le deuxième ensemble de capteurs correspond à un premier réseau linéaire de capteurs acoustiques de chacune des antennes élémentaires.

L'invention se rapporte également à un procédé de commande du véhicule sous marin ou du réseau de communication 70 selon l'invention, comprenant les étapes suivantes :
- relier un premier ensemble de capteurs, comprenant un premier nombre de capteurs acoustiques, en communication avec le câble lorsque le véhicule est connecté mécaniquement au câble,
- relier un deuxième ensemble de capteurs acoustiques, comprenant deuxième nombre de capteurs acoustiques, plus faible que le premier nombre, en communication avec la mémoire lorsque le véhicule n'est pas connecté mécaniquement au câble.

Avantageusement, le procédé comprend les étapes suivantes :
- transmettre des mesures générées par le premier ensemble de capteurs au câble, lorsque le véhicule est connecté mécaniquement au câble,
- transmettre des mesures générées par le deuxième ensemble de capteurs à la mémoire, lorsque le véhicule est déconnecté mécaniquement du câble.

Avantageusement, le premier ensemble de capteurs correspond à l'ensemble des capteurs acoustiques de l'antenne, c'est-à-dire des deux antennes élémentaires. Le deuxième ensemble de capteurs correspond à un premier réseau linéaire de capteurs acoustiques de chacune des antennes élémentaires.

L'invention se rapporte également à un procédé général de commande comprenant les deux procédés de commandes précédentes.

Avantageusement, le véhicule se déplace à une vitesse supérieure, sensiblement parallèlement aux axes des antennes, lors de l'étape d'alimentation simultanée du premier nombre de capteurs que lors de l'alimentation simultanée du deuxième nombre de capteurs. Autrement dit, le véhicule se déplace avantageusement à une vitesse supérieure, sensiblement parallèlement aux axes des antennes, lors de l'étape d'alimentation simultanée de tous les capteurs acoustiques que lors de l'étape d'alimentation simultanée des capteurs du premier réseau uniquement.

Le procédé comprend avantageusement une étape intermédiaire d'alimentation simultanée d'un ensemble intermédiaire de capteurs acoustiques comprenant un nombre intermédiaire de capteurs compris entre le premier nombre et le deuxième nombre lorsque le véhicule est connecté, c'est-à-dire couplé, mécaniquement au câble, la vitesse du véhicule sous marin étant moins élevée, parallèlement à l'axe x lors de l'étape d'alimentation simultanée du nombre intermédiaire de capteurs que lors de l'étape d'alimentation simultanée de tous les capteurs.

L'invention se rapporte également à un procédé d'acquisition d'images au moyen du sonar SAS dans lequel lors de l'étape d'alimentation du premier nombre de capteurs acoustiques, le véhicule sous-marin est relié à un véhicule de surface.

Chaque organe ou moyen de commande peut comprendre un ou plusieurs circuits électroniques dédiés ou un circuit à usage général. Chaque circuit électronique peut comprendre une machine de calcul reprogrammable (un processeur ou un micro contrôleur par exemple) et/ ou un calculateur exécutant un programme comprenant une séquence d'instructions et/ou une machine de calcul dédiée (par exemple un ensemble de portes logiques comme un FPGA, un DSP ou un ASIC, ou tout autre module matériel).

Comme vu précédemment, le véhicule sous-marin est apte à être utilisé en tant que véhicule sous-marin autonome.

Le véhicule sous-marin peut être utilisé en tant que ROV c'est-à-dire en tant que véhicule non autonome encore appelé ROV acronyme de l'expression anglo-saxonne « Remote Operated Vehicle ». Ce véhicule est relié à un véhicule de surface par un câble. Le véhicule de surface alimente électriquement le propulseur du véhicule sous-marin et chaque antenne de réception et de préférence tout le sonar via le câble. Le véhicule sous-marin est propulsé par son propre propulseur.

Avantageusement, le ROV transmet les données sonar au véhicule de surface par le câble pour permettre le traitement en temps réel à bord du bâtiment de surface et/ou transmission par voie radio vers un centre de traitement terrestre.

Dans l'art antérieur, un véhicule destiné à être utilisé en tant que ROV est classiquement sous motorisé par rapport au navire de surface, la vitesse d'opération est alors lente (quelques noeuds) et l'antenne de réception du SAS est par nature plus courte (de l'ordre de 1m) que lorsqu'elle est installée sur un poisson remorqué ce qui limite la couverture horaire en imagerie. Toutefois, la vitesse d'opération peut être plus élevée que lorsque le véhicule sous-marin est déconnecté du véhicule de surface car le propulseur et les antennes de réception sont alimentées électriquement via le câble. L'invention permet donc d'adapter le nombre de capteurs alimentés à la vitesse que le véhicule peut atteindre lorsqu'il est utilisé en tant que ROV.

Dans la présente demande de brevet, lorsque l'on alimente un réseau de capteurs, on alimente tous les capteurs du réseau.

## Revendications

1. Véhicule sous-marin (1) comprenant un propulseur (2) apte à propulser le véhicule sous-marin, le véhicule sous-marin comprenant un sonar à antenne synthétique comprenant un ensemble d'au moins une antenne physique (4a, 4b) de réception d'ondes acoustiques, le véhicule sous-marin (1) comprenant un connecteur (9) apte à coupler mécaniquement de façon amovible un câble (8) au véhicule sous-marin de façon à permettre de remorquer le véhicule sous-marin par un véhicule de surface, **caractérisé en ce que** l'antenne physique de réception comprend une pluralité de capteurs acoustiques, le véhicule sous-marin (1) comprenant un réseau électrique apte à véhiculer de l'énergie électrique jusqu'à l'antenne de réception (4a, 4b), le réseau électrique (50) étant configuré de façon à présenter plusieurs états dans lesquels il est apte à véhiculer l'énergie électrique vers des ensembles différents de capteurs acoustiques présentant des nombres respectifs différents de capteurs acoustiques, le réseau électrique (50) étant apte à être dans au moins un premier état et dans au moins un deuxième état dans lequel le réseau électrique est apte à véhiculer de l'énergie électrique vers un nombre de capteurs acoustiques inférieur au nombre de capteurs acoustiques alimentés dans chaque premier état, le réseau électrique (50) de l'antenne de réception étant configuré pour être dans un dudit au moins un premier état lorsque le véhicule sous-marin (1) est couplé mécaniquement au câble et dans un dudit au moins un deuxième état lorsque le véhicule sous-marin (1) est découplé mécaniquement du câble (8).

2. Véhicule sous-marin selon la revendication précédente, dans lequel le véhicule sous-marin est apte à être utilisé en véhicule sous-marin autonome lorsqu'il est découplé mécaniquement du câble et à être utilisé en véhicule sous-marin non autonome lorsqu'il est couplé mécaniquement au véhicule de surface via le câble.

3. Véhicule sous-marin (1) selon l'une quelconque des revendications précédentes, dans lequel l'antenne de réception d'ondes acoustiques comprend une pluralité de réseaux de capteurs acoustiques alignés selon un même axe.

4. Véhicule sous-marin selon la revendication précédente, dans lequel le réseau électrique (50) est apte à être un premier état dans lequel il est apte à véhiculer de l'énergie simultanément vers tous les capteurs acoustiques de l'antenne physique de réception et dans un deuxième état dans lequel il est apte à véhiculer de l'énergie vers seulement une partie des réseaux linéaires de l'antenne.

5. Véhicule sous-marin selon la revendication précédente, dans lequel l'antenne physique de réception comprend deux réseaux linéaires de capteurs acoustiques, chaque réseau linéaire comprenant un ensemble de capteurs acoustiques, les capteurs acoustiques de l'ensemble étant adjacents, les capteurs acoustiques des deux ensembles étant différents.

6. Véhicule sous-marin selon la revendication 4, dans lequel l'antenne physique de réception comprend deux réseaux linéaires de capteurs acoustiques comprenant respectivement un premier ensemble de capteurs acoustiques et un deuxième ensemble de capteurs acoustiques différents des capteurs acoustiques du premier ensemble, chaque couple de capteurs adjacents de l'antenne physique de réception comprenant un capteur acoustique du premier ensemble et un capteur acoustique du deuxième ensemble.

7. Véhicule sous-marin selon l'une quelconque des revendications 3 à 6, dans lequel l'ensemble d'au moins une antenne physique de réception comprend deux antennes physiques de réception d'ondes acoustiques parallèles comprenant chacune une pluralité de réseaux de capteurs acoustiques alignés selon un même axe d'alignement, les axes d'alignement respectifs des deux antennes étant sensiblement parallèles et distants l'un de l'autre.

8. Véhicule sous-marin selon la revendication 5, dans lequel le réseau électrique (50) est apte à être dans un premier état dans lequel il est apte à alimenter simultanément tous les capteurs acoustiques des deux antennes de réception et dans un deuxième état dans lequel il est apte à alimenter seulement un réseau linéaire de capteurs acoustiques de chacune des antennes de réception parallèles.

9. Véhicule sous-marin selon la revendication 6, dans lequel le réseau d'alimentation présente un premier état dans lequel il est apte à alimenter simultanément tous les capteurs acoustiques des deux antennes de réception et un deuxième état dans lequel il est apte à alimenter tous les capteurs acoustiques d'une seule des deux antennes physique de réception.

10. Véhicule sous-marin (1) selon l'une quelconque des revendications 1 à 9, dans lequel le connecteur (9) assure une connexion électrique entre le réseau électrique (50) et le câble (8) lorsque le câble (8) est couplé mécaniquement au connecteur (9), le réseau électrique (50) étant configuré pour alimenter électriquement l'antenne de réception via le câble (8) lorsque le réseau électrique (50) est dans le premier état.

11. Véhicule sous-marin (1) selon l'une quelconque des revendications 1 à 10, dans lequel le connecteur (9) assure une connexion en communication entre le câble (8) et un réseau de communication (70) du véhicule sous-marin (1) lorsque le câble (8) est couplé mécaniquement au connecteur (9), le réseau de communication étant configuré pour relier l'antenne de réception en communication au câble (8) de sorte à permettre de transmettre les mesures réalisées par l'antenne physique de réception au câble (8) lorsque le réseau d'alimentation est dans le premier état.

12. Véhicule sous-marin selon l'une quelconque des revendications 1 à 11, comprenant des moyens de traitement comprenant un ensemble d'au moins un processeur apte à traiter des mesures délivrées par l'antenne physique de réception, les moyens de traitement étant configurés pour qu'un processeur de l'ensemble d'au moins un processeur traite des mesures délivrées par l'antenne physique de réception uniquement lorsque le véhicule sous-marin est connecté mécaniquement au câble.

13. Procédé de commande d'un réseau d'électrique d'un véhicule sous-marin (1) selon l'une quelconque des revendications précédentes, ledit procédé comprenant les étapes suivantes :
- alimenter un premier ensemble de capteurs acoustiques, comprenant un premier nombre de capteurs acoustiques, lorsque le véhicule est couplé mécaniquement au câble, - alimenter un deuxième ensemble de capteurs, comprenant un deuxième nombre plus faible de capteurs acoustiques que le premier nombre, lorsque le véhicule est découplé mécaniquement du câble.

14. Procédé de commande d'un réseau électrique d'un véhicule sous-marin selon la revendication précédente et la revendication 5, comprenant les étapes suivantes :
- alimenter simultanément tous les capteurs acoustiques des deux antennes de réception lorsque le véhicule est couplé mécaniquement au câble,
- alimenter seulement un sous-ensemble de capteurs acoustiques de chacune des antennes de réception parallèles, lorsque le véhicule est découplé mécaniquement du câble.

15. Procédé de commande d'un réseau de communication d'un véhicule sous-marin selon la revendication 11 ou la revendication 12, comprenant les étapes suivantes :
- relier un premier ensemble de capteurs, comprenant un premier nombre de capteurs acoustiques, en communication avec le câble lorsque le véhicule est couplé mécaniquement au câble,
- relier un deuxième ensemble de capteurs acoustiques, comprenant un deuxième nombre de capteurs acoustiques plus faible que le premier nombre, en communication avec une mémoire du véhicule lorsque le véhicule est découplé mécaniquement du câble.

16. Procédé de commande selon la revendication précédente, comprenant les étapes suivantes :
- transmettre des mesures générées par le premier ensemble de capteurs au câble, lorsque le véhicule est couplé mécaniquement au câble,
- transmettre des mesures générées par le deuxième ensemble de capteurs à la mémoire, lorsque le véhicule est découplé mécaniquement du câble.

## Patentansprüche

1. Unterwasserfahrzeug (1), das ein Triebwerk (2) umfasst, das das Unterwasserfahrzeug antreiben kann, wobei das Unterwasserfahrzeug ein Sonar mit synthetischer Antenne umfasst, das eine Menge von mindestens einer physischen Antenne (4a, 4b) zum Empfangen von Schallwellen umfasst, wobei das Unterwasserfahrzeug (1) einen Verbinder (9) umfasst, der ein Kabel (8) mit dem Unterwasserfahrzeug lösbar mechanisch koppeln kann, so dass das Unterwasserfahrzeug von einem Oberflächenfahrzeug geschleppt werden kann, **dadurch gekennzeichnet, dass** die physische Empfangsantenne eine Vielzahl von Schallsensoren umfasst, wobei das Unterwasserfahrzeug (1) ein Stromnetz umfasst, das elektrische Energie zur Empfangsantenne (4a, 4b) transportieren kann, wobei das Stromnetz (50) so konfiguriert ist, dass es eine Vielzahl von Zuständen aufweist, in denen es elektrische Energie zu verschiedenen Mengen von Schallsensoren mit einer jeweils unterschiedlichen Anzahl von Schallsensoren übertragen kann, wobei das Stromnetz (50) in mindestens einem ersten Zustand und in mindestens einem zweiten Zustand sein kann, in dem das Stromnetz elektrische Energie zu einer Anzahl von Schallsensoren leiten kann, die geringer ist als die Anzahl der in jedem ersten Zustand versorgten Schallsensoren, wobei das Stromnetz (50) der Empfangsantenne so konfiguriert ist, dass es in einem der mindestens einen ersten Zustände ist, wenn das Unterwasserfahrzeug (1) mechanisch mit dem Kabel gekoppelt ist, und in einem mindestens einen zweiten Zustand, wenn das Unterwasserfahrzeug (1) mechanisch vom Kabel (8) getrennt ist.

2. Unterwasserfahrzeug nach dem vorhergehenden Anspruch, wobei das Unterwasserfahrzeug als autonomes Unterwasserfahrzeug verwendet werden kann, wenn es mechanisch vom Kabel getrennt ist, und als nichtautonomes Unterwasserfahrzeug, wenn es über das Kabel mechanisch mit dem Oberflächenfahrzeug gekoppelt ist.

3. Unterwasserfahrzeug (1) nach einem der vorhergehenden Ansprüche, wobei die Schallwellenempfangsantenne eine Vielzahl von Schallsensornetzwerke umfasst, die entlang einer selben Achse ausgerichtet sind.

4. Unterwasserfahrzeug nach dem vorhergehenden Anspruch, wobei das Stromnetz (50) in einem ersten Zustand, in dem es Energie gleichzeitig zu allen Schallsensoren der physischen Empfangsantenne transportieren kann, und in einem zweiten Zustand sein kann, in dem es Energie nur zu einem Teil der linearen Netzwerke der Antenne transportieren kann.

5. Unterwasserfahrzeug nach dem vorhergehenden Anspruch, wobei die physische Empfangsantenne zwei lineare Netzwerke von Schallsensoren umfasst, wobei jedes lineare Netzwerk eine Menge von Schallsensoren umfasst, wobei die Schallsensoren der Menge nebeneinander liegen und die Schallsensoren der beiden Mengen unterschiedlich sind.

6. Unterwasserfahrzeug nach Anspruch 4, wobei die physische Empfangsantenne zwei lineare Netzwerke von Schallsensoren umfasst, die jeweils eine erste Menge von Schallsensoren und eine zweite Menge von Schallsensoren umfassen, die sich von den Schallsensoren der ersten Menge unterscheiden, wobei jedes benachbarte Sensorpaar der physischen Empfangsantenne einen Schallsensor der ersten Menge und einen Schallsensor der zweiten Menge umfasst.

7. Unterwasserfahrzeug nach einem der Ansprüche 3 bis 6, wobei die Menge von mindestens einer physischen Empfangsantenne zwei parallele physische Schallwellenempfangsantennen umfasst, von denen jede eine Vielzahl von entlang einer selben Ausrichtungsachse ausgerichteten Schallsensornetzwerken umfasst, wobei die jeweiligen Ausrichtungsachsen der beiden Antennen im Wesentlichen parallel und voneinander beabstandet sind.

8. Unterwasserfahrzeug nach Anspruch 5, wobei das Stromnetz (50) in einem ersten Zustand, in dem es alle Schallsensoren der beiden Empfangsantennen gleichzeitig versorgen kann, und in einem zweiten Zustand sein kann, in dem es nur ein lineares Netzwerk von Schallsensoren jeder der parallelen Empfangsantennen versorgen kann.

9. Unterwasserfahrzeug nach Anspruch 6, wobei das Versorgungsnetz einen ersten Zustand, in dem es alle Schallsensoren der beiden Empfangsantennen gleichzeitig versorgen kann, und einen zweiten Zustand aufweist, in dem es alle Schallsensoren von nur einer der beiden physischen Empfangsantennen versorgen kann.

10. Unterwasserfahrzeug (1) nach einem der Ansprüche 1 bis 9, wobei der Verbinder (9) eine elektrische Verbindung zwischen dem Stromnetz (50) und dem Kabel (8) gewährleistet, wenn das Kabel (8) mechanisch mit dem Verbinder (9) gekoppelt ist, wobei das Stromnetz (50) so konfiguriert ist, dass es die Empfangsantenne über das Kabel (8) elektrisch versorgt, wenn das Stromnetz (50) im ersten Zustand ist.

11. Unterwasserfahrzeug (1) nach einem der Ansprüche 1 bis 10, wobei der Verbinder (9) eine Kommunikationsverbindung zwischen dem Kabel (8) und einem Kommunikationsnetz (70) des Unterwasserfahrzeugs (1) gewährleistet, wenn das Kabel (8) mechanisch mit dem Verbinder (9) gekoppelt ist, wobei das Kommunikationsnetz zum kommunikativen Verbinden der Empfangsantenne mit dem Kabel (8) konfiguriert ist, so dass die von der physischen Empfangsantenne durchgeführten Messwerte zum Kabel (8) übertragen werden können, wenn das Versorgungsnetz im ersten Zustand ist.

12. Unterwasserfahrzeug nach einem der Ansprüche 1 bis 11, das Verarbeitungsmittel umfasst, die eine Menge von mindestens einem Prozessor umfassen, der von der physischen Empfangsantenne gelieferte Messwerte verarbeiten kann, wobei die Verarbeitungsmittel so konfiguriert sind, dass ein Prozessor der Menge von mindestens einem Prozessor die von der physischen Empfangsantenne gelieferten Messwerte nur dann verarbeitet, wenn das Unterwasserfahrzeug mechanisch mit dem Kabel verbunden ist.

13. Verfahren zum Steuern eines Stromnetzes eines Unterwasserfahrzeugs (1) nach einem der vorhergehenden Ansprüche, wobei das Verfahren die folgenden Schritte umfasst:
- Versorgen einer ersten Menge von Schallsensoren, die eine erste Anzahl von Schallsensoren umfasst, wenn das Fahrzeug mechanisch mit dem Kabel gekoppelt ist,
- Versorgen einer zweiten Menge von Sensoren, die eine zweite Anzahl von Schallsensoren umfasst, die kleiner als die erste Anzahl ist, wenn das Fahrzeug mechanisch vom Kabel abgekoppelt ist.

14. Verfahren zum Steuern eines Stromnetzes eines Unterwasserfahrzeugs nach dem vorhergehenden Anspruch und nach Anspruch 5, das die folgenden Schritte umfasst:
- gleichzeitiges Versorgen aller Schallsensoren der beiden Empfangsantennen, wenn das Fahrzeug mechanisch mit dem Kabel gekoppelt ist,
- Versorgen nur einer Teilmenge von Schallsensoren jeder der parallelen Empfangsantennen, wenn das Fahrzeug mechanisch vom Kabel getrennt ist.

15. Verfahren zum Steuern eines Kommunikationsnetzes eines Unterwasserfahrzeugs nach Anspruch 11 oder 12, das die folgenden Schritte umfasst:
- Verbinden einer ersten Menge von Sensoren, die eine erste Anzahl von Schallsensoren in Kommunikation mit dem Kabel umfasst, wenn das Fahrzeug mechanisch mit dem Kabel gekoppelt ist,
- Verbinden einer zweiten Menge von Schallsensoren, die eine zweite Anzahl von Schallsensoren umfasst, die kleiner als die erste Anzahl ist, mit einem Speicher des Fahrzeugs, wenn das Fahrzeug mechanisch vom Kabel getrennt ist.

16. Steuerverfahren nach dem vorhergehenden Anspruch, das die folgenden Schritte umfasst:
- Übertragen von durch die erste Menge von Sensoren erzeugten Messwerten zu dem Kabel, wenn das Fahrzeug mechanisch mit dem Kabel gekoppelt ist,
- Übertragen von durch die zweite Sensormenge erzeugten Messwerten zu dem Speicher, wenn das Fahrzeug mechanisch vom Kabel getrennt ist.

## Claims

1. An underwater vehicle (1) comprising a propeller (2) capable of propelling the underwater vehicle, the underwater vehicle comprising a synthetic antenna sonar comprising a set made up of at least one physical antenna (4a , 4b) for receiving acoustic waves, the underwater vehicle (1) comprising a connector (9) capable of detachably mechanically coupling a cable (8) to the underwater vehicle so as to allow the underwater vehicle to be towed by a surface vehicle, **characterised in that** the physical receiving antenna comprises a plurality of acoustic sensors, the underwater vehicle (1) comprising an electrical network capable of conveying electrical energy to the receiving antenna (4a, 4b), the electrical network (50) being configured to have a plurality of states in which it is capable of conveying electrical energy to various sets of acoustic sensors having various respective numbers of acoustic sensors, the electrical network (50) being capable of being in at least one first state and at least one second state in which the electrical network is capable of conveying electrical energy to fewer acoustic sensors than the number of acoustic sensors powered in each first state, the electrical network (50) of the receiving antenna being configured to be in one of said at least one first states when the underwater vehicle (1) is mechanically coupled to the cable and to be in one of said at least one second states when the underwater vehicle (1) is mechanically uncoupled from the cable (8).

2. The underwater vehicle according to the preceding claim, wherein the underwater vehicle can be used as an autonomous underwater vehicle when it is mechanically uncoupled from the cable and as a non-autonomous underwater vehicle when it is mechanically coupled to the surface vehicle via the cable.

3. The underwater vehicle (1) according to any one of the preceding claims, wherein the antenna for receiving acoustic waves comprises a plurality of arrays of acoustic sensors aligned along one and the same axis.

4. The underwater vehicle according to the preceding claim, wherein the electrical network (50) is capable of being in a first state in which it is capable of simultaneously conveying energy to all the acoustic sensors of the physical receiving antenna and of being in a second state in which it is capable of conveying energy to only a portion of the linear arrays of the antenna.

5. The underwater vehicle according to the preceding claim, wherein the physical receiving antenna comprises two linear arrays of acoustic sensors, with each linear array comprising a set of acoustic sensors, the acoustic sensors of the set being adjacent, the acoustic sensors of the two sets being different.

6. The underwater vehicle according to claim 4, wherein the physical receiving antenna comprises two linear arrays of acoustic sensors respectively comprising a first set of acoustic sensors and a second set of acoustic sensors different from the acoustic sensors of the first set, with each pair of adjacent sensors of the physical receiving antenna comprising an acoustic sensor of the first set and an acoustic sensor of the second set.

7. The underwater vehicle according to any one of claims 3 to 6, wherein the set of at least one physical receiving antenna comprises two parallel physical antennas for receiving acoustic waves each comprising a plurality of arrays of acoustic sensors aligned along one and the same alignment axis, with the respective alignment axes of the two antennas being substantially parallel and spaced apart from each other.

8. The underwater vehicle according to claim 5, wherein the electrical network (50) is capable of being in a first state in which it is capable of simultaneously powering all the acoustic sensors of the two receiving antennas and of being in a second state in which it is capable of powering only one linear array of acoustic sensors of each of the parallel receiving antennas.

9. The underwater vehicle according to claim 6, wherein the power supply network has a first state, in which it is capable of simultaneously powering all the acoustic sensors of the two receiving antennas, and a second state, in which it is capable of powering all the acoustic sensors of only one of the two physical receiving antennas.

10. The underwater vehicle (1) according to any one of claims 1 to 9, wherein the connector (9) provides an electrical connection between the electrical network (50) and the cable (8) when the cable (8) is mechanically coupled to the connector (9), with the electrical network (50) being configured to electrically power the receiving antenna via the cable (8) when the electrical network (50) is in the first state.

11. The underwater vehicle (1) according to any one of claims 1 to 10, wherein the connector (9) provides a connection communicating between the cable (8) and a communication network (70) of the underwater vehicle (1) when the cable (8) is mechanically coupled to the connector (9), with the communication network being configured to communicatively connect the receiving antenna to the cable (8) so as to allow the measurements carried out by the physical receiving antenna to be transmitted to the cable (8) when the power supply network is in the first state.

12. The underwater vehicle according to any one of claims 1 to 11, comprising processing means comprising a set of at least one processor capable of processing measurements delivered by the physical receiving antenna, with the processing means being configured so that a processor from the set of at least one processors processes measurements delivered by the physical receiving antenna only when the underwater vehicle is mechanically connected to the cable.

13. A method for controlling an electrical network of an underwater vehicle (1) according to any one of the preceding claims, said method comprising the following steps:
- powering a first set of acoustic sensors, comprising a first number of acoustic sensors, when the vehicle is mechanically coupled to the cable;
- powering a second set of sensors, comprising a second smaller number of acoustic sensors than the first number, when the vehicle is mechanically uncoupled from the cable.

14. The method for controlling an electrical network of an underwater vehicle according to the preceding claim and claim 5, comprising the following steps:
- simultaneously powering all the acoustic sensors of the two receiving antennas when the vehicle is mechanically connected to the cable;
- powering only one subset of acoustic sensors of each of the parallel receiving antennas when the vehicle is mechanically uncoupled from the cable.

15. The method for controlling a communication network of an underwater vehicle according to claim 11 or claim 12, comprising the following steps:
- connecting a first set of sensors, comprising a first number of acoustic sensors in communication with the cable when the vehicle is mechanically coupled to the cable;
- connecting a second set of acoustic sensors, comprising a second number of acoustic sensors, lower than the first number, in communication with a memory of the vehicle when the vehicle is mechanically uncoupled from the cable.

16. The method according to the preceding claim, comprising the following steps:
- transmitting measurements generated by the first set of sensors to the cable, when the vehicle is mechanically coupled to the cable;
- transmitting measurements generated by the second set of sensors to the memory, when the vehicle is mechanically uncoupled from the cable.
